# FASCICULE DE BREVET EUROPEEN

(11) **EP 2 665 645 B1**
(45) Date de publication et mention de la délivrance du brevet: **23.11.2016**
(21) Numéro de dépôt: 12700693.0
(22) Date de dépôt: 19.01.2012
(51) Int. Cl.: B64C 25/44, B64C 25/40

(54) **DISPOSITIF DE FREINAGE ET D'ENTRAÎNEMENT EN ROTATION D'UNE ROUE D'AÉRONEF**
VORRICHTUNG ZUM BREMSEN UND ZUM ANTRIEB EINES FLUGZEUGRADS
DEVICE FOR BRAKING AND POWERING AN AIRCRAFT WHEEL

(30) Priorité: 21.01.2011 FR 1150508
(43) Date de publication de la demande: 27.11.2013
(73) Titulaire: Safran Landing Systems, 78140 Vélizy-Villacoublay (FR)
(72) Inventeur: YIU, Jean-Marc, F-78140 Vélizy-Villacoublay (FR)
(74) Mandataire: Parzy, Benjamin Alain
(86) Numéro de dépôt international: PCT/EP2012/050805
(87) Numéro de publication internationale: WO 2012/098198

(56) Documents cités:
- DE-A1-102008 006 295
- US-A- 3 977 631
- US-A- 4 575 027

## Description

L'invention est relative à un dispositif de freinage et d'entraînement en rotation d'une roue d'aéronef.

### ARRIERE-PLAN TECHNOLOGIQUE DE L'INVENTION

On connaît du document US3977631 un atterrisseur comportant au moins un essieu portant à rotation une roue équipée d'un frein. Le frein comporte une pile de disques dont certains sont solidaires en rotation de la roue et d'autre, en alternance avec les premiers sont solidaires en rotation d'un tube de torsion. Le tube de torsion est lui-même monté à rotation sur l'essieu et est solidaire en rotation d'une couronne portant des actionneurs de freinage.

La couronne est sélectivement entraînée en rotation ou bloquée au moyen d'un moteur électrique. Ainsi, en actionnant les actionneurs de freinage de sorte que les disques soient pressés entre eux, tout en actionnant le moteur électrique, on solidarise en rotation la couronne à la roue et on provoque un entraînement en rotation de la roue par le moteur électrique, permettant ainsi de déplacer l'aéronef sans utiliser les groupes propulseurs de ce dernier.

Au contraire, en bloquant le moteur, la couronne est immobile et le frein peut alors être utilisé pour freiner la roue. Cependant, il convient que le moteur soit dimensionné pour résister au couple maximal de freinage, ce qui peut conduire à un moteur de taille et de masse importante. En outre, en cas de défaillance du moteur, la fonction de freinage est perdue, puisqu'il n'est plus possible de bloquer la couronne.

### OBJET DE L'INVENTION

L'invention a pour objet de proposer un dispositif de freinage et d'entraînement en rotation d'une roue d'aéronef dans lequel la défaillance du moteur d'entraînement en rotation ne remet pas en cause la fonction de freinage.

### BREVE DESCRIPTION DE L'INVENTION

En vue de la réalisation de ce but, on propose un dispositif de freinage et d'entraînement en rotation d'une roue montée à rotation sur un essieu d'atterrisseur d'aéronef, le dispositif comportant :
- un tube de torsion adapté à être monté à rotation sur l'essieu qui porte la roue ;
- une pile de disques dont des premiers disques comportant des moyens de leur solidarisation en rotation à la roue et des deuxièmes disques disposés en alternance avec les premiers et comportant des moyens de leur solidarisation en rotation au tube de torsion ;
- une couronne portant des actionneurs de freinage adaptés à presser sélectivement les disques entre eux, la couronne étant solidaire en rotation du tube de torsion pour former une partie tournante du dispositif ;
- un organe d'entraînement en rotation de la partie tournante.

Selon l'invention, le dispositif comporte également des moyens de blocage sélectif en rotation de la partie tournante qui sont indépendants de l'organe d'entraînement en rotation.

Ainsi, lorsque la couronne doit être bloquée en vue d'assurer le freinage de la roue, les moyens de blocage permettent de bloquer la couronne sans l'aide du moteur. Celui-ci ne subit plus le couple de freinage qui est repris par les moyens de blocage. Par ailleurs, en cas de défaillance du moteur, les moyens de blocage permettent néanmoins d'immobiliser la couronne en rotation et d'assurer le freinage de l'aéronef.

### BREVE DESCRIPTION DES FIGURES

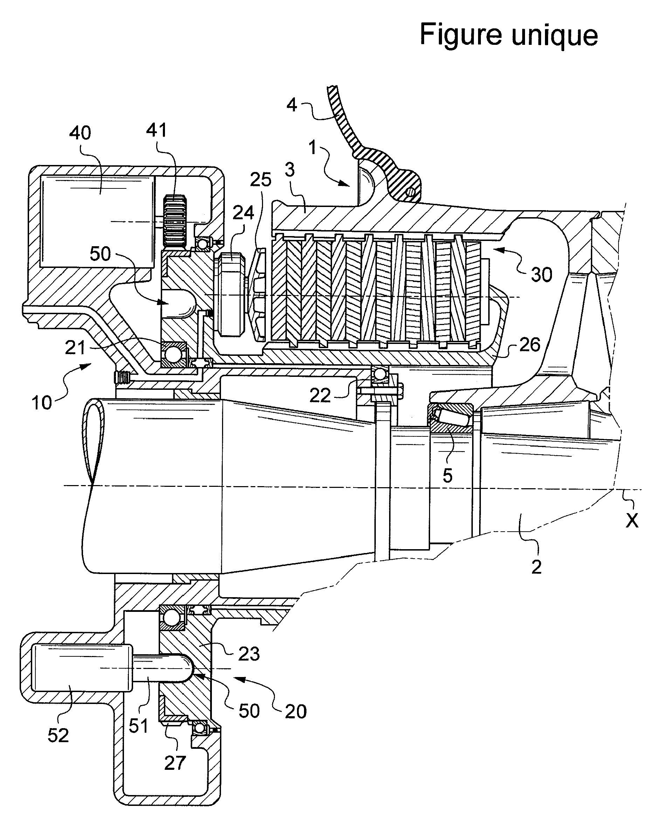

L'invention sera mieux comprise à la lumière de la description qui suit d'un mode particulier de réalisation de l'invention, en référence à la figure ci-jointe qui est une vue en coupe partielle d'un dispositif de freinage et d'entraînement en rotation d'une roue montée sur un atterrisseur, selon un mode particulier de réalisation de l'invention.

### DESCRIPTION DETAILLEE DE L'INVENTION

L'invention est ici décrite en relation avec une roue 1 montée pour tourner sur un essieu 2 d'atterrisseur. La roue 1 comporte une jante 3 portant un pneumatique 4 et montée sur l'essieu au moyen de roulements 5 (un seul est ici visible) pour tourner selon un axe de rotation X.

Le dispositif de l'invention comporte une base 10 qui est montée autour de l'essieu 2 est qui est arrêtée en rotation par des moyens d'arrêts non représentée. Par exemple, la base 10 peut être fixée sur une collerette de l'essieu 2.

Une partie tournante 20 est montée sur la base 10 pour tourner autour de celle-ci au moyen de roulements 21 et 22. La partie tournante 20 comporte une couronne 23 portant des actionneurs de freinage 24, ici des actionneurs hydrauliques comportant un piston 25 déplaçable axialement. La partie tournante 20 comporte par ailleurs un tube de torsion 26 s'étendant à l'intérieure de la jante 3. Entre la jante 3 et le tube de torsion 26 s'étend une pile de disques 30 qui comporte alternativement des premiers disques liés en rotation à la jante 3 et des deuxièmes disques liés en rotation au tube de torsion 26. Les actionneurs de freinage 24 sont adaptés à presser sélectivement les disques 30 les uns contre les autres.

La partie tournante 20 porte une roue dentée 27 coopérant avec un pignon 41 porté à l'extrémité de l'arbre d'un moteur d'entraînement 40 porté par la base 10. Ainsi, une rotation du pignon 41 sous l'action du moteur 40 provoque la rotation de la partie tournante 20. Il suffit dès lors d'actionner les actionneurs de freinage 24 pour presser les disques 30 les uns contre les autres pour solidariser la roue 1 en rotation avec la partie tournante 20 et ainsi provoquer la rotation de la roue 1. On parvient ainsi à provoquer un déplacement de l'aéronef sans recourir à ses groupes propulseurs.

Pour utiliser le dispositif de l'invention pour freiner la roue, il convient au contraire de bloquer en rotation la partie tournante 20. Pour ce faire, et selon l'invention, le dispositif est pourvu de moyens de blocage indépendants du moteur 40 d'entraînement en rotation et comprenant ici :
- des cavités 50 pratiquées sur une face de la couronne 23 et réparties régulièrement sur cette dernière selon une circonférence ;
- un actionneur de blocage 52 solidaire de la base 10 et comportant un doigt 51 mobile selon une direction parallèle à l'axe de rotation X entre une position sortie illustrée ici vers laquelle il est rappelé par un organe ressort interne à l'actionneur et dans laquelle il est susceptible de rentrer dans l'une des cavités 50, et une position escamotée dans laquelle il est placé par l'actionneur lorsqu'il est souhaité que le moteur 40 puisse entraîner la partie tournante en rotation.

Ainsi, dans l'état normal, le doigt mobile est rappelé vers la couronne 23 et bloque celle-ci en rotation dès qu'une cavité 50 vient en regard du doigt 51. Il est possible de neutraliser ce blocage en provoquant l'escamotage du doigt 51, ce qui libère la partie tournante 20. L'opération du dispositif de l'invention se fait comme suit :
- lorsque l'on veut freiner la roue 1, l'alimentation du moteur d'entraînement 40 et de l'actionneur de blocage 52 est coupée. Le doigt 51 est alors automatiquement rappelé vers la couronne 23. Au premier freinage, la couronne 23 va tourner jusqu'à ce qu'une des cavités 50 vienne en regard du doigt qui, sous l'effet de l'organe ressort associé, va pénétrer dans la cavité pour bloquer la partie tournante 20 en rotation. Le couple de freinage est alors repris par le doigt 51, sans que le moteur 40 ne subisse ce couple.
- lorsque l'on veut faire tourner la roue 1, on alimente le moteur d'entraînement 40 ainsi que l'actionneur de blocage 52. Celui-ci provoque l'escamotage du doigt 51, ce qui neutralise les moyens de blocage et libère dès lors la partie tournante 20 qui peut tourner en étant entraînée par le moteur d'entraînement 40. Il suffit alors de commander les actionneurs de freinage 24 pour provoquer la rotation de la roue 1.

Ainsi, lors des phases de freinage, le moteur d'entraînement 40 ne subit pas le couple de freinage. Par ailleurs, le blocage de la partie tournante 20 est automatique du fait du rappel du doigt 51 vers la couronne 23. Ainsi, une défaillance du moteur d'entraînement 40 ne peut empêcher le freinage de la roue

L'invention n'est bien sûr pas limitée à ce qui vient d'être décrit mais englobe bien au contraire toute variante entrant dans le cadre défini par les revendications.

En particulier, bien que dans l'exemple illustré, le dispositif comporte une base fixe rapportée sur l'essieu, la base pourra être constituée directement de l'essieu ou d'une partie de l'atterrisseur portant l'essieu.

Bien que dans l'exemple illustré, l'organe de blocage soit un doigt déplaçable axialement et pénétrant dans des cavités réparties circonférentiellement sur une face de la couronne, on pourra utiliser d'autres types d'organes de blocage, comme un doigt déplaçable radialement pour pénétrer dans des cavités pratiquées sur une face externe de la couronne, ou encore un crabot.

Bien que dans l'exemple illustré, les actionneurs de freinage soient hydrauliques, ils pourront être de type électromécanique. De même, l'organe d'entraînement en rotation 40 et l'organe de blocage pourront être hydraulique ou électromécanique.

Bien qu'ici, la couronne soit venue de matière avec le tube de torsion, on pourra bien sûr prévoir que ces deux éléments soient fabriqués séparément mais solidarisés entre eux en rotation.

## Revendications

1. Dispositif de freinage et d'entraînement en rotation d'une roue (1) montée à rotation sur un essieu d'atterrisseur d'aéronef, le dispositif comportant :
- un tube de torsion (26) adapté à être monté à rotation sur l'essieu qui porte la roue ;
- une pile de disques (30) dont des premiers disques comportant des moyens de leur solidarisation en rotation à la roue et des deuxièmes disques disposés en alternance avec les premiers et comportant des moyens de leur solidarisation en rotation au tube de torsion ;
- une couronne (23) portant des actionneurs de freinage (24) adaptés à presser sélectivement les disques entre eux, la couronne étant solidaire en rotation du tube de torsion (26) pour former une partie tournante (20) du dispositif ;
- un organe d'entraînement en rotation (40) de la partie tournante (20) ;
- des moyens de blocage (51,52) sélectif en rotation de la partie tournante ; **caractérisé en ce que** les moyens de blocage (51,52) sont indépendants de l'organe d'entraînement en rotation.

2. Dispositif selon la revendication 1, dans lequel les moyens de blocage sont agencés pour présenter un état normal dans lequel ils tendent à bloquer en rotation la partie tournante (20), et un état neutralisé qui doit être commandé, dans lequel ils laissent la partie tournante (20) libre d'être entraînée sélectivement par l'organe d'entraînement en rotation (40).

3. Dispositif selon la revendication 1, dans lequel les moyens de blocage comportent un doigt (51) mobile en regard de la partie tournante et rappelé vers celle-ci pour pénétrer sélectivement dans au moins une cavité (50) de la partie tournante lorsque la cavité est en regard du doigt.

## Patentansprüche

1. Vorrichtung zur Bremsung und zum Drehantrieb eines Rades (1), das drehbar auf einer Radachse eines Luftfahrzeugfahrwerks gelagert ist, wobei die Vorrichtung umfasst:
- ein Torsionsrohr (26), das dazu geeignet ist, drehbar auf der das Rad tragenden Radachse gelagert zu werden;
- einen Stapel Scheiben (30), von denen erste Scheiben Mittel zu ihrer drehfesten Verbindung mit dem Rad umfassen und von denen zweite Scheiben, die abwechselnd mit den ersten Scheiben angeordnet sind, Mittel zu ihrer drehfesten Verbindung mit dem Torsionsrohr umfassen;
- einen Kranz (23), der Bremsaktoren (24) trägt, die dazu geeignet sind, die Scheiben untereinander selektiv zu pressen, wobei der Kranz drehfest mit dem Torsionsrohr (26) verbunden ist, um einen drehbaren Teil (20) der Vorrichtung zu bilden;
- ein Drehantriebsorgan (40) zum Drehantrieb des drehbaren Teils (20);
- Blockiermittel (51, 52) zur selektiven Drehblockierung des drehbaren Teils; **dadurch gekennzeichnet, dass** die Blockiermittel (51, 52) unabhängig von dem Drehantriebsorgan sind.

2. Vorrichtung nach Anspruch 1, wobei die Blockiermittel so ausgebildet sind, dass sie einen normalen Zustand aufweisen, in dem sie darauf abzielen, den drehbaren Teil in Drehung zu blockieren, sowie einen neutralisierten Zustand, der gesteuert werden muss und in dem sie es dem drehbaren Teil (20) gestatten, selektiv von dem Drehantriebsorgan angetrieben zu werden.

3. Vorrichtung nach Anspruch 1, wobei die Blockiermittel einen Finger (51) umfassen, der gegenüber dem drehbaren Teil beweglich ist und der in Richtung desselben rückgestellt ist, um selektiv in mindestens einen Hohlraum (50) des drehbaren Teils einzudringen, wenn sich der Hohlraum gegenüber dem Finger befindet.

## Claims

1. Device for braking and rotating a wheel (1) which is fitted such as to rotate on a aircraft landing gear axle, the device comprising:
- a torque tube (26) which is designed to be fitted such as to rotate on the axle which supports the wheel;
- a stack of discs (30), the first discs of which comprise means for rendering them integral in rotation with the wheel, and second discs which are arranged alternating with the first, and comprising means for rendering them integral in rotation with the torque tube;
- a ring (23) which supports braking actuators (24) which are designed to press the discs together selectively, the ring being integral in rotation with the torque tube (26) in order to form a rotating part (20) of the device;
- a rotation unit (40) for rotation of the rotating part (20);
- means (51, 52) for selective blocking in rotation of the rotating part; **characterised in that** the blocking means (51, 52) are independent from the rotation unit.

2. Device according to claim 1, wherein the blocking means are designed to have a normal state in which they tend to block the rotation of the rotating part (20), and a neutralised state which must be controlled, in which they leave the rotating part (20) free to be rotated selectively by the rotation unit (40).

3. Device according to claim 1, wherein the blocking means comprise a finger (51) which is mobile opposite the rotating part, and is returned towards the latter in order to penetrate selectively in at least one cavity (50) in the rotating part when the cavity is opposite the finger.
